(19) Europäisches Patentamt
European Patent Office
Office européen des brevets

(11) **EP 2 693 665 B1**

(12) **EUROPEAN PATENT SPECIFICATION**

(45) Date of publication and mention
of the grant of the patent:
**13.06.2018  Bulletin 2018/24**

(51) Int Cl.:
***H04B 10/61*** *(2013.01)*

(21) Application number: **12305966.9**

(22) Date of filing: **03.08.2012**

(54) **Chromatic dispersion compensation in a coherent optical receiver**

Ausgleich der chromatischen Dispersion in einem kohärenten optischen Empfänger

Compensation de dispersion chromatique dans un récepteur optique cohérent

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.02.2014  Bulletin 2014/06**

(73) Proprietor: **Alcatel Lucent
91620 Nozay (FR)**

(72) Inventors:
 • **Dorize, Christian
  78320 LE MESNIL SAINT DENIS (FR)**
 • **Pointurier, Yvan
  91300 MASSY (FR)**
 • **Vacondio, Francesco
  75004 PARIS (FR)**
 • **Bigo, Sebastien
  91300 MASSY (FR)**

(74) Representative: **Berthier, Karine
  Alcatel-Lucent International
  Patent Business
  Site Nokia Paris Saclay
  Route de Villejust
  91620 Nozay (FR)**

(56) References cited:
**EP-A1- 2 357 740          US-A1- 2012 114 341
US-A1- 2012 128 376**

 • **OMID ZIA-CHAHABI ET AL: "Efficient Frequency-Domain Implementation of Block-LMS/CMA Fractionally Spaced Equalization for Coherent Optical Communications", IEEE PHOTONICS TECHNOLOGY LETTERS, IEEE SERVICE CENTER, PISCATAWAY, NJ, US, vol. 23, no. 22, 1 November 2011 (2011-11-01), pages 1697-1699, XP011358351, ISSN: 1041-1135, DOI: 10.1109/LPT.2011.2166257**
 • **GEYER J C ET AL: "Efficient frequency domain chromatic dispersion compensation in a coherent Polmux QPSK-receiver", OPTICAL FIBER COMMUNICATION (OFC), COLLOCATED NATIONAL FIBER OPTIC ENGINEERS CONFERENCE, 2010 CONFERENCE ON (OFC/NFOEC), IEEE, PISCATAWAY, NJ, USA, 21 March 2010 (2010-03-21), pages 1-3, XP031677273,**

**Description**

**Technical field**

The present invention generally relates to the field of optical communication networks, in particular to coherent optical receivers for optical communication networks. More in particular, the present invention relates to the compensation of chromatic dispersion at a coherent optical receiver for an optical communication network.

**Background art**

In a typical optical communication network, optical signals are transmitted along optical links (typically, optical fibers) between nodes of the network. Typically, an optical signal results from the digital modulation of the amplitude and/or phase of the light emitted by a light source (such as a laser) included in a transmitter of a node, at a certain wavelength, and it propagates along an optical fiber.

For increasing the capacity of the optical fiber, it is also known to implement the Polarization Division Multiplexing (PDM) technique, which consists in transmitting, along a same optical fiber, two optical signals onto light carriers having a same wavelength but orthogonal states of polarization.

Typically, in an optical communication network, transmitters and receivers comprised in the nodes guarantee a certain optical transmission reach, namely a maximum length of the optical links which allows receiving the optical signals with acceptable performance without the need of any intermediate regeneration. Indeed, the length of the optical links is limited by a number of phenomena that degrade optical signals during their propagation and impair the reception performance. These phenomena include chromatic dispersion.

As known, chromatic dispersion (in the following indicated also as simply CD) is a phenomenon according to which phase velocity and group velocity of the light propagating along an optical fiber depend on the light wavelength.

The effects of chromatic dispersion on an optical signal including a sequence of light pulses may be harmful to the reception performance. Indeed, the various wavelength components of the optical signal propagate along the optical fiber at different velocities. This results in the broadening of the pulses, i.e. each pulse may reach the receiver with an increased duration, which may cause errors in recovering the digital data originally transmitted. The amount of chromatic dispersion which affects an optical signal increases as the length of the optical fiber along which the signal propagates increases.

At the receiving side, the optical signals (one per polarization) are typically processed, e.g. by a coherent optical receiver.

A coherent optical receiver typically comprises a local oscillator generating a local light carrier, which is combined with the received optical signals. After a photoelectric conversion of the resulting optical signals, base band electric signals are obtained. The base band electric signals are subsequently processed by analog-to-digital converters (one per polarization), which convert them into corresponding digital signals (one per polarization), and a digital signal processor (DSP), which is typically a microprocessor.

The digital signal processor comprises a block performing the digital compensation of the chromatic dispersion of the recovered digital signals. This block typically comprises CD compensating Finite Impulse Response (FIR) filters (one per polarization). The FIR filters may be implemented either in the time domain or in the frequency domain. The digital signal processor typically further comprises an adaptive equalizer for addressing linear polarization-dependent impairments such as polarization mode dispersion (PMD), as well as for compensating the residual CD. This equalizer is commonly composed of FIR filters whose taps are adjusted using e.g., the known Constant Modulus Algorithm (CMA).

O. Zia-Chahabi, et al., "Efficient frequency-domain implementation of block-LMS/CMA fractionally spaced equalization for coherent optical communications", IEEE Photonics Technology Letters, vo. 23, n. 22, November 15, 2011, discloses a frequency-domain implementation of a fractionally spaced block-least-mean-square (LMS) or block-constant-modulus-algorithm (CMA) equalizer.

J.C. Geyer, et al., "Efficient frequency domain chromatic dispersion compensation in a coherent Polmux QPSK-receiver", Optical Fiber Communication (OFC) and National Fiber Optic Engineers Conference, 2010 Conference on (OFC/NFOEC), IEEE, Piscataway, NJ, USA, 21 March 2010, discloses a frequency domain chromatic dispersion equalization in an ASIC for digital coherent signal processing.

EP 2357740 A1 discloses an optical receiver including a waveform distortion compensator to perform an operation on digital signal representing an optical signal generated by an A/D converter to compensate for waveform distortion of the optical signal; a phase detector to generate phase information representing sampling phase of the A/D converter; a phase adjuster to generate digital signal representing an optical signal in which the sampling phase of the A/D converter is adjusted from an output signal of the waveform distortion compensator using the phase information; a demodulator to generate a demodulated signal from the output signal of the phase adjuster; a phase controller to control the sampling phase of the A/D converter; a peak detector to detect a peak value of the phase information while the sampling phase of the A/D converter is controlled by the phase controller; and a compensation controller to control the waveform distortion compensator using the peak value.

US 2012/128376 A1 discloses a method and system for estimating chromatic dispersion of an optical signal in a coherent receiver is provided that is insensitive to polarization mode dispersion (PMD) and other polarization effects in the optical communication system. The effects of chromatic dispersion in the optical system are estimated by first calculating a phase shift between a pair of related frequency domain data outputs of a Fourier transform circuit. The calculated phase shift includes a linear phase component that is proportional to the chromatic dispersion, a DC constant phase component, and a data spectrum component. The calculated phase shift is then averaged over a number of clock cycles to remove the data spectrum components. The time averaged result is used to normalize any effects of PMD from the received signal. A slope of the linear phase component as a function of frequency is then calculated and used to estimate the value for chromatic dispersion. The chromatic dispersion estimate is then used to determine a number of coefficients of an inverse frequency response of the chromatic dispersion in the system, and is used to compensate for the chromatic dispersion.

US 2012/114341 A1 discloses a system and method are disclosed which compensate for chromatic dispersion and polarization mode dispersion in a digital signal. The signal is adjusted for chromatic dispersion in the frequency-domain. The signal is then converted to the time-domain and at least a portion of the signal is estimated to produce channel parameters. The channel parameters are converted to the frequency domain and used to compensate for polarization mode dispersion in the signal.

## Summary of the invention

The inventors noticed that the block performing the CD compensation is the most power consuming module among the signal processing modules of the coherent optical receiver. Indeed, the CD compensating block may consume an amount of power higher that 20 W for implementing the FIR filtering needed for CD compensation.

Indeed, the FIR filters included in the CD compensating block have a predefined length which is tailored on the maximum amount of chromatic dispersion to be compensated. Accordingly, the CD compensating block of the DSP performs a fixed number of calculations which is tailored on the maximum amount of chromatic dispersion to be compensated. Such maximum amount of chromatic dispersion is related to the optical transmission reach (worst case). However, if the optical signal is transmitted along an optical link whose length is shorter than the optical transmission reach, the actual amount of chromatic dispersion affecting the optical signal at the end of the optical link is lower than the maximum amount cited above.

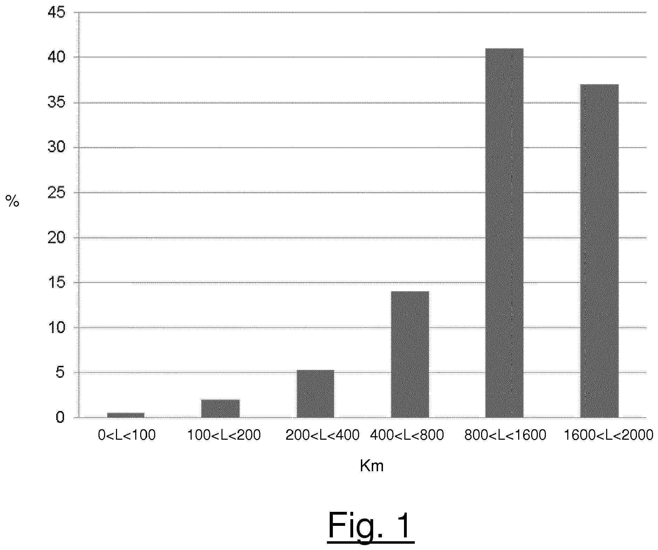

The inventors noticed that in typical optical communication networks the optical links between the nodes of the network are often shorter than the optical reach. In Figure 1, a probability density function (in %) of optical link lengths L (in km) in a European network comprising 31 nodes is shown. Transmitters of the network have an optical reach equal to 2000 km, so optical links longer than 2000 km are split into several shorter optical links and use regeneration at intermediate nodes. As can be seen from Figure 1, about 41% of optical links have a length L ranging between 800 km and 1600 km, while about 37% of optical links are longer that 1600 km but shorter than 2000 km.

In the case considered above, known receivers are equipped with a CD compensating block which is able to compensate the CD corresponding to the optical reach, namely 2000 km. However, the majority of optical links have a length L between 800 km and 1600 km. Therefore, disadvantageously, the CD compensating block of the receivers is not efficiently operated for most of the time. Indeed, when it operates on optical links shorter than the optical reach, it performs an unnecessary large number of computations and consumes an unnecessary high amount of power.

Accordingly, the inventors have addressed the problem of providing a method for compensating chromatic dispersion affecting an optical signal received at a coherent optical receiver which allows saving computational resources and, therefore, reducing the power consumed by the receiver.

According to a first aspect, the present invention provides a method for compensating chromatic dispersion affecting an optical signal received at a coherent optical receiver of a node of an optical communication network, compensating comprising applying a frequency domain digital algorithm, the frequency domain digital algorithm comprising performing a fast fourier transform, a filtering and an inverse fast fourier transform on a number N of digital samples of the optical signal, the algorithm having one or more computational parameters, the method comprising the steps of:

a) receiving a chromatic dispersion information of the chromatic dispersion;
b) on the basis of the received chromatic dispersion information, determining one or more target computational parameters by minimizing a number of operations for executing the algorithm; and
c) compensating the chromatic dispersion by applying the algorithm using the one or more target computational parameters.

Preferably, the one or more target computational parameters comprise at least one of: a size N of a calculation window of the digital algorithm and a window translation X of the calculation window, N and X being expressed as numbers of samples of the optical signal.

Preferably, step b) comprises minimizing a number of operations per sample, the number of operations per sample being equal to a number of operations performed when the calculation window is processed divided by the window translation X.

Preferably, step b) comprises reading the one or more target computational parameters from a pre-calculated lookup table indexed by a set of possible values of the chromatic dispersion information.

Alternatively, step b) comprises calculating the one or more target computational parameters based on an actual value of the chromatic dispersion information.

Preferably, the method further comprises, between steps b) and c) a further step of:
b') determining a target clock frequency at which the minimized number of operations shall be performed and a target supply voltage which shall be supplied to at least one chromatic dispersion compensator comprised in the coherent optical receiver for performing the step c).

Preferably, the target clock frequency is such as the minimized number of operations is performed within a predetermined time interval.

Preferably, the target supply voltage is the lowest voltage which shall be supplied to the at least one chromatic dispersion compensator so that it may operate at the target clock frequency.

Preferably, step b') comprises reading at least one of the target clock frequency and the target supply voltage from a pre-calculated lookup table indexed by a set of possible values of the chromatic dispersion information.

Preferably, step b') comprises calculating the at least one of the target clock frequency and the target supply voltage based on the minimized number of operations.

Preferably, at step a) the chromatic dispersion information are received from a control plane of the optical communication network.

According to a second aspect, the present invention provides a coherent optical receiver for a node of an optical communication network, the receiver being configured to receive and optical signal affected by chromatic dispersion, the coherent optical receiver comprising a chromatic dispersion compensator configured to compensate the chromatic dispersion by applying a frequency domain digital algorithm, the frequency domain digital algorithm comprising performing a fast fourier transform, a filtering and an inverse fast fourier transform on a number N of digital samples of the optical signal, the algorithm having one or more computational parameters, and to:

- receive a chromatic dispersion information indicative of the chromatic dispersion;
- on the basis of the received chromatic dispersion information, determine one or more target computational parameters by minimizing a number of operations for executing the algorithm; and
- compensate the chromatic dispersion by applying the algorithm using the one or more target computational parameters.

According to a third aspect, the present invention provides an optical communication network comprising a node in turn comprising a coherent optical receiver according as set forth above.

According to a third aspect, the present invention provides a computer program product comprising computer-executable instructions for performing, when the program is run on a computer, the steps of the method as set forth above.

## Brief description of the drawings

Embodiments of the invention will be better understood by reading the following detailed description, given by way of example and not of limitation, to be read with reference to the accompanying drawings, wherein:

- Figure 1 is a graph showing the probability density function of optical link lengths in an exemplary European network of 31 nodes;
- Figure 2 is a block diagram of a coherent optical receiver for a node of an optical communication network according to a preferred embodiment of the present invention;
- Figure 3 is a block diagram of a chromatic dispersion compensator comprised within the coherent optical receiver of Figure 2;
- Figure 4 is a flow chart illustrating some steps of the method for compensating the chromatic dispersion according to the present invention;
- Figure 5 is a flow chart illustrating other steps of the method for compensating the chromatic dispersion according to the present invention;
- Figure 6 is a graph showing the number of operations needed for compensating the chromatic dispersion of one digital sample as a function of the FFT/IFFT window size in an exemplary situation; and

- Figure 7 is a graph showing the minimized number of operations needed for compensating the chromatic dispersion of one digital sample as a function of the optical link length in an exemplary situation for optical link lengths ranging between 100 km and 2000 km observed in the European network cited above.

## Detailed description of preferred embodiments of the invention

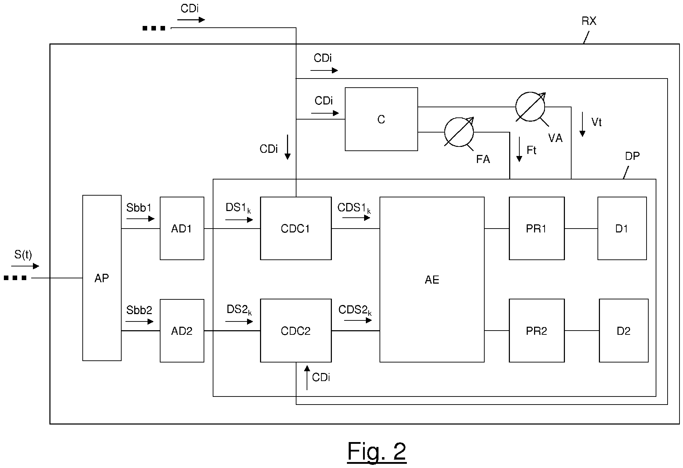

Figure 2 shows a block diagram of a coherent optical receiver RX for a node of an optical communication network (not shown in the drawings) according to a preferred embodiment of the present invention.

The coherent optical receiver RX comprises an analog portion AP, a first analog-to-digital converter AD1, a second analog-to-digital converter AD2, a digital portion DP, a controller C, a voltage actuator VA and a clock frequency actuator FA. According to a preferred embodiment of the present invention, the coherent optical receiver RX preferably further comprises a storage unit, non shown in the drawings.

The coherent optical receiver RX may comprise further modules that are not shown in Figure 2 and will not be described since they are not relevant to the present description.

The analog portion AP preferably has an input substantially corresponding to one input of the coherent optical receiver RX, and two outputs. The analog portion AP is preferably implemented as an arrangement of optical, electrical and electro-optical components. The physical implementation of the analog portion AP will not be described in detail, since it is not relevant to the present description.

Preferably, the first analog-to-digital converter AD1 and the second analog-to-digital converter AD2 are connected to the outputs of the analog portion AP. The digital portion DP has two inputs that are preferably connected to the outputs of the first analog-to-digital converter AD1 and of the second analog-to-digital converter AD2.

The digital portion DP is preferably a Digital Signal Processor (DSP).

The digital portion DP preferably comprises a first chromatic dispersion compensator CDC1, a second chromatic dispersion compensator CDC2, an adaptive equalizer AE, a first phase recovery module PR1, a second phase recovery module PR2, a first decision module D1 and a second decision module D2.

The input of the first chromatic dispersion compensator CDC1 and the input of the second chromatic dispersion compensator CDC2 correspond to two inputs of the digital portion DP. The first and second chromatic dispersion compensator CDC1, CDC2 have respective further inputs which jointly correspond to a further input of the coherent optical receiver RX. According to a preferred embodiment of the invention, the further input of the coherent optical receiver RX is preferably connected to a control plane apparatus of the optical communication network not shown in the Figures. The outputs of the first and second chromatic dispersion compensator CDC1, CDC2 are preferably connected to two inputs of the adaptive equalizer AE. The adaptive equalizer AE has two outputs that are preferably connected to the inputs of the first phase recovery module PR1 and the second phase recovery module PR2. The first phase recovery module PR1 and the second phase recovery module PR2 are then connected to the first decision module D1 and to the second decision module D2, respectively.

The digital portion DP of the coherent optical receiver RX may comprise further modules that are not shown in Figure 2 and will not be described since they are not relevant to the present description.

The controller C preferably has an input substantially corresponding to the further input of the coherent optical receiver RX, and two outputs.

One of the outputs of the controller C is preferably connected to the input of the voltage actuator VA and the other output is preferably connected to the input of the clock frequency actuator FA. The output of the voltage actuator VA and the output of the clock frequency actuator FA are preferably connected to two further inputs of the digital portion DP. According to alternative embodiments not shown in the drawings, the output of the voltage actuator VA and the output of the clock frequency actuator FA are preferably connected to two further inputs of the first chromatic dispersion compensator CDC1 and to two further inputs of the second chromatic dispersion compensator CDC2.

The voltage actuator VA may be a DC-DC converter. The clock frequency actuator FA may be a Phase-Locked Loop (PLL).

The storage unit (not shown in Figure 2) of the coherent optical receiver RX is connected to the first and second chromatic dispersion compensator CDC1, CDC2, and to the controller C.

The operation of the coherent optical receiver RX of Figure 2 will now be described in detail.

It is assumed that a modulated optical signal S(t) is received by the coherent optical receiver RX and that such signal S(t) results from the multiplexing of a first signal having a first polarization (e.g. horizontal polarization) and a second signal having a second polarization (e.g. vertical polarization) along an optical link reaching a node including the receiver RX.

When the modulated optical signal S(t) is received at the input of the optical coherent receiver RX, the analog portion AP preferably processes it for generating a first component of the modulated optical signal S(t), which carries the information transmitted in association with the first polarization, and a second component of the modulated optical signal S(t), which carries the information transmitted in association with the second polarization. Both the first component and the second component outputted by the analog portion AP are preferably in the form of complex base band electrical signals Sbb1, Sbb2. The operation of the analog portion AP will not be described in further detail, since it is not relevant to the present description.

Then, the first analog-to-digital converter AD1 samples the first base band signal Sbb1, thereby generating a first sequence of complex digital samples $DS1_k$. Substantially at the same time, the second analog-to-digital converter AD2 samples the second base band signal Sbb2, thereby generating a second sequence of complex digital samples $DS2_k$.

Next, the first samples $DS1_k$ and the second samples $DS2_k$ are fed to the first chromatic dispersion compensator CDC1 and to the second chromatic dispersion compensator CDC2, respectively. The first chromatic dispersion compensator CDC1 and the second chromatic dispersion compensator CDC2 implement a CD compensating algorithm for compensating the chromatic dispersion of the first samples $DS1_k$ and of the second samples $DS2_k$, respectively.

In particular, the first chromatic dispersion compensator CDC1 and the second chromatic dispersion compensator CDC2 receive from the control plane apparatus (not shown in Figure 2) a chromatic dispersion information CDi indicative of the amount of chromatic dispersion affecting optical signals which propagate along the optical link. The chromatic dispersion information CDi preferably comprises a rough value of the actual chromatic dispersion affecting optical signals propagating along the optical link. This value depends on the fiber type included in the optical link and on an estimate of the length of the optical link, and it is usually known by the control plane of the optical communication network. It is to be noted that an accurate value of the amount of chromatic dispersion is not needed, since possible discrepancies between the rough value provided by the control plane and the actual value are handled by the adaptive equalizer AE. Alternatively, the chromatic dispersion information CDi may be in the form of the optical link length.

Then the first chromatic dispersion compensator CDC1 and the second chromatic dispersion compensator CDC2 use the chromatic dispersion information CDi to set one or more parameters of the CD compensating algorithm so as to minimize the number of operations, as it will be described in detail herein after.

The first chromatic dispersion compensator CDC1 and the second chromatic dispersion compensator CDC2 output dispersion compensated sequences of complex digital samples $CDS1_k$ and $CDS2_k$ that are then transmitted to the adaptive equalizer AE. The adaptive equalizer AE substantially filters the dispersion compensated complex digital samples $CDS1_k$ and $CDS2_k$ and may be controlled by a suitable algorithm (e.g. the known Constant Modulus Algorithm or CMA) in order to dynamically adjust the taps of the filters to track small variations of some propagation conditions, such as small variations in the chromatic dispersion.

The output signals of the adaptive equalizer AE are fed into the two phase recovery modules PR1, PR2 and the phase-recovered signals are finally processed by the two decision modules D1 and D2 which recover the transmitted digital data.

The operation of the adaptive equalizer AE, the phase recovery units PR1, PR2 and the decision modules D1 and D2 will not be described in further detail as it is not relevant to the present description.

In parallel with the first and second chromatic dispersion compensators CDC1, CDC2, also the controller C receives the chromatic dispersion information CDi. The controller C, together with the voltage actuator VA and the clock frequency actuator FA, scales the supply voltage and the clock frequency of the digital portion DP as a whole (or, according to alternative embodiments, of the first and second chromatic dispersion compensators CDC1, CDC2 only), based on its actual computational workload according to a Dynamic Voltage and Frequency Scaling (DVFS) technique, as it will be described in detail herein after.

The storage unit of the coherent optical receiver RX preferably comprises a lookup table in turn comprising the following information:

- a set of possible values of the chromatic dispersion information CDi, each possible value being associated to a respective possible optical link reaching the node. As mentioned above, the information CDi associated to each optical link may be in the form of the chromatic dispersion amount affecting optical signals propagating along the optical link or in the form of the optical link length. In particular, a set of possible values of optical link lengths may be provided as equispaced samples of a continuous range delimited by a minimum optical link length and a maximum optical link length. For instance, assuming that the optical link length may range from few tens of kilometres, e.g. 100 km, to the optical transmission reach of the node, e.g. 2000 km, the set of possible values of the optical link length stored in the lookup table may be 100 km, 200 km, 300 km, ... 2000 km;

- for each possible value of the chromatic dispersion information CDi, a set of target computational parameters of the CD compensating algorithm implemented within the first and second chromatic dispersion compensators CDC1, CDC2, i.e. a set of computational parameters that allow the first and second chromatic dispersion compensators CDC1, CDC2 to perform a minimized number of operations for compensating the chromatic dispersion (as it will be described in detail herein after); and

- for each possible value of the chromatic dispersion information CDi, a target clock frequency Ft and a target supply voltage Vt, i.e. a clock frequency and a supply voltage suitable for operating the digital portion DP as a whole (or, according to alternative embodiments, only the first and second chromatic dispersion compensators CDC1, CDC2) according to the DVFS technique mentioned above.

The lookup table is preferably a multidimensional array indexed by the value of the chromatic dispersion information CDi.

The lookup table is preferably written by the operator of the optical communication network prior to deployment of the node. The lookup table may also be updated "on field" once the node is operating, in the presence of variations in the amount of chromatic dispersion associated to the optical links reaching the node.

In particular, the operator may determine the target computational parameters of the CD compensating algorithm as described in the following.

As known, the algorithm for compensating the chromatic dispersion may be performed in the time domain or in the frequency domain. It will be assumed in the following that the chromatic dispersion compensators CDC1, CDC2 implement a frequency domain CD compensating algorithm for compensating the chromatic dispersion of the respective sequence of samples $DS1_k$, $DS2_k$.

More particularly, the frequency domain CD compensating algorithm performed by the compensators CDC1, CDC2 preferably comprises the following steps:

i) providing a sequence of N digital samples $DS1_k$, $DS2_k$ outputted by the analog-to-digital converters AD1, AD2. The number N will be also termed "calculation window size" in the following description and in the claims,

ii) calculating a Fast Fourier Transform (FFT) of such N consecutive samples $DS1_k$, $DS2_k$ in order to obtain N frequency-domain samples;

iii) performing a matrix multiplication of the N frequency-domain samples by the inverse of a channel response NxN matrix which models the propagation of the optical signal along the optical link and takes into account the chromatic dispersion; and

iv) calculating an Inverse Fast Fourier Transform (IFFT) of the N samples resulting from the matrix multiplication to recover a sequence of N consecutive time-domain CD compensated samples $CDS1_k$, $CDS2_k$.

Assuming that the FFT is computed according to the known radix-2 Cooley-Tukey algorithm, an FFT of N consecutive samples (wherein N is an integer number power of 2) comprises a number of real multiplications equal to $N \cdot \log_2(N)$. Then, the matrix multiplication of step ii) above comprises one complex multiplication per sample of each frequency-domain digital signal, and hence, it comprises a total number of real multiplications equal to 4N. Finally, the IFFT comprises again a number of real multiplications equal to $N \cdot \log_2(N)$. Therefore, the overall number of real multiplications per calculation window is $2N \cdot \log_2(N)+4N$ per polarization.

Besides, the amount of chromatic dispersion affecting each sample $DS1_k$, $DS2_k$ may be expressed as the number SPR of samples, adjacent to the considered one, over which the energy of the sample is spread due to chromatic dispersion. SPR is an integer number equal to or higher than 1. In the following, it will be referred to as "spreading number SPR". The minimum size of the calculation window depends on the amount of chromatic dispersion, namely on the number SPR. In particular, the size of the calculation window N shall be equal to or higher than SPR.

If N=SPR, the chromatic dispersion of a single sample is compensated each time a calculation window of size N is processed. Then, the calculation window of size N is translated by one sample and the chromatic dispersion for the subsequent sample is compensated.

If N>SPR, the number of samples for which the chromatic dispersion is compensated each time a calculation window of size N is processed is equal to X=N-(SPR-1), X being an integer number equal to or higher than 2. The calculation window is then translated by X samples and the computation is repeated, thereby allowing compensating the dispersion for the subsequent X samples. In the following description and in the claims, the number X will be referred to as "window translation".

Hence, for compensating the chromatic dispersion affecting a sequence of samples, the number of operations per sample substantially equals the number of operations performed when a calculation window of size N is processed divided by the number of samples for which the chromatic dispersion is compensated, namely the window translation X.

Under the above assumptions, the target computational parameters to be written in the lookup table preferably comprise:

-   a target window size N*; and
-   a target window translation X*.

The target window size N* and the target window translation X* are preferably determined as the window size and the window translation that minimize the number of operations per sample as defined above.

Given a specific optical link length and hence a specific amount of chromatic dispersion to be compensated (in terms of SPR), the target window size N* and the target window translation X* may be found by minimizing the number of operations per sample under the following constraints:

- N* is a power of 2;
- N* ≤ Nmax; and
- N* ≥ SPR,

wherein Nmax is a maximum window size, namely the window size that allows performing compensation of the chromatic dispersion associated to the optical reach of the node (reference case). Such number Nmax shall also be compliant with the calculation capabilities of the chromatic dispersion compensators CDC1, CDC2 in terms of CPU and memory resources.

The determination of the target window size N* within the interval of acceptable window sizes SPR ≤ N ≤ Nmax and the target window translation X* thus results from a trade-off. Indeed, a smaller window size N implies a lower number of operations per calculation window (and then a lower computational cost per calculation window), but a lower number of samples X per calculation window are compensated and hence the number of times the calculation window shall be translated increases. On the other hand, a larger window size N allows compensating a larger number of samples X (and, therefore, a lower number of translations are needed), but it implies a higher computational cost per calculation window (the number of operations per calculation window being increased).

The determined target window size N* and the target window translation X* are then written in the look-up table in association with the corresponding chromatic dispersion information CDi.

Then, the operator determines the target clock frequency Ft and the target supply voltage Vt as described in the following.

Indeed, the inventors have noticed that the power consumption for a digital signal processing module may be expressed as $P=k \cdot F \cdot V^2$, wherein k is a constant of the processor, F is the clock frequency and V is the supply voltage. The clock frequency F and the supply voltage V of a digital signal processing module are related to the computational workload of the module, i.e. to the number of operations that the module needs to perform and to the required performances e.g. in terms of speed. In principle, the larger the number of operations, the higher must be the clock frequency F and the supply voltage V (and therefore the power consumption).

According to a preferred embodiment of the present invention, for each possible value of the chromatic dispersion information CDi, the target clock frequency Ft is determined as the clock frequency of the digital portion DP (or, according to alternative embodiments, the clock frequency of the first and second chromatic dispersion compensators CDC1, CDC2 only) that allows performing the chromatic dispersion compensation with the minimized number of operations under a given constraint. The constraint may be a delay constraint. In this case, the target clock frequency Ft is determined as the clock frequency allowing to perform the chromatic dispersion compensation with the minimized number of operations while keeping constant the latency within the digital portion DP of the coherent optical receiver RX (or, according to alternative embodiments, within the first and second chromatic dispersion compensators CDC1, CDC2 only), with respect to the reference case (i.e. the case of performing the compensation of the chromatic dispersion associated to the optical reach of the node). As in most cases the number of operations is lower than in the reference case, the target clock frequency Ft is advantageously reduced with respect to this reference case.

Then, the target supply voltage Vt is preferably selected as the lowest supply voltage capable of guaranteeing the operation of the whole digital portion DP of the coherent optical receiver RX (or, according to alternative embodiments, of the chromatic dispersion compensators CDC1, CDC2 only) at the target clock frequency Ft.

More particularly, the lowest supply voltage V which allows the digital portion DP as a whole (or the chromatic dispersion compensators CDC1, CDC2 only) to operate up to a clock frequency F is related to such clock frequency F according to the following equation:

$$V = a \times F + b \qquad \text{for } Fmin \leq F \leq Fmax$$

$$V = Vmin \qquad \text{for } 0 \leq F \leq Fmin$$

where Fmin and Fmax are a minimum and maximum clock frequencies at which the digital portion DP as a whole (or the chromatic dispersion compensators CDC1, CDC2 only) may be operated and Vmin is a minimum supply voltage for operating the digital portion DP as a whole (or the chromatic dispersion compensators CDC1, CDC2 only). The parameters a and b have processor dependent values. For instance, if $a=0.8 \cdot 10^{-9}$ and b = 1.8, the digital portion DP may be operated up to a target clock frequency Ft of 0.25 GHz with a target supply voltage Vt equal to 2 Volts, and up to a target clock frequency Ft of 4 GHz with a target supply voltage Vt equal to 5 Volts

It follows that also the target supply voltage Vt is, in most situations, advantageously reduced with respect to the reference case.

The determined target clock frequency Ft and target supply voltage Vt are then written in the lookup table in association with the corresponding value of the chromatic dispersion information CDi.

The lookup table is configured to being looked through by the first and second chromatic dispersion compensators CDC1, CDC2 and by the controller C using the chromatic dispersion information CDi as index, as it will be described in detail herein after.

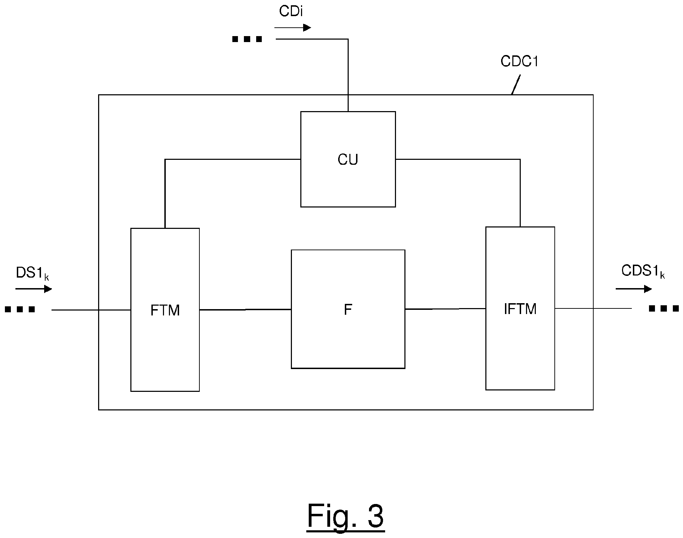

The first and second chromatic dispersion compensators CDC1, CDC2 will now be described in detail with reference to the block diagrams of Figures 2 and 3. As the operation of the two compensators CDC1, CDC2 is substantially the same, in the following only one of them, e.g. the first chromatic dispersion compensator CDC1, will be described in detail.

According to a preferred embodiment of the present invention, the chromatic dispersion compensator CDC1 comprises a Fast Fourier Transform (FFT) module FTM, a filter F, and an Inverse Fast Fourier Transform (IFFT) module IFTM (see Figure 3). The module FT performing the FFT, the filter F and the module IFTM performing the IFFT are connected in cascade.

Moreover, the chromatic dispersion compensator CDC1 preferably comprises a control unit CU which is connected to both the module FTM performing the FFT and the module IFTM performing the IFFT.

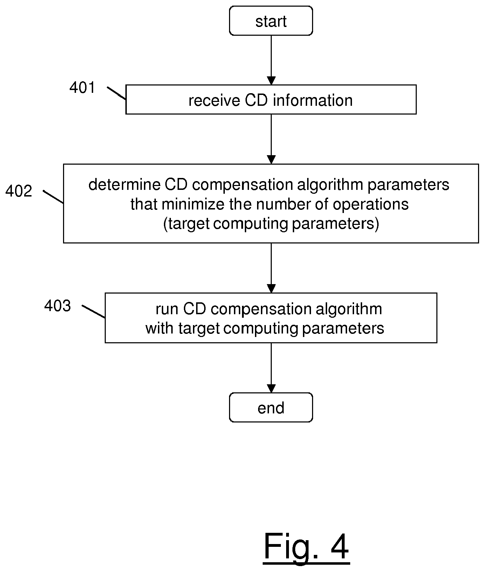

The flow chart of Figure 4 shows the steps of the method according to the present invention performed by the chromatic dispersion compensator CDC1.

During operation, at step 401, the control unit CU preferably receives the chromatic dispersion information CDi. Preferably, the control unit CU receives the chromatic dispersion information CDi from the control plane of the optical communication network. Alternatively, the chromatic dispersion information CDi may be carried to the control unit CU within a signaling message or may be known in advance by the receiver in case of purely static networking.

Then, at step 402, the control unit CU preferably determines the target computational parameters of the CD compensating algorithm. In particular, according to the preferred embodiment of the present invention, the control unit CU looks through the lookup table of the storage unit using the value of the chromatic dispersion information CDi as index, and retrieves the target computational parameters (i.e. the FFT/IFFT target window size $N^*$ and the target window translation $X^*$) corresponding to that particular value of the chromatic dispersion information CDi.

Next, the chromatic dispersion compensator CDC1 runs the CD compensating algorithm using the target computational parameters (step 403). In particular, when the chromatic dispersion compensator CDC1 of Figure 3 receives the sequence of complex digital samples $DS1_k$ from the analog-to-digital converter AD1, the module FT preferably performs the FFT calculation by using a window of target size equal to $N^*$ and a window target translation equal to $X^*$ for converting the complex digital samples $DS1_k$ from time domain to frequency domain.

Then, the frequency domain samples outputted by the module FT are fed to the filter F which performs a matrix multiplication of the N frequency-domain samples by the inverse of the above cited channel response NxN matrix, and outputs the dispersion compensated frequency domain samples.

Next, the dispersion compensated frequency domain samples are fed to the IFT module which converts them back into the time domain and finally outputs the dispersion compensated complex digital samples $CDS1_k$.

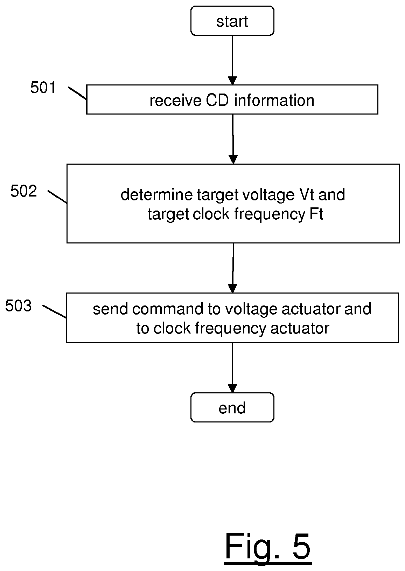

The flow chart of Figure 5 shows the steps of the method according to the present invention performed by the controller C in parallel with respect to steps 401-403.

At step 501, the controller C also preferably receives the chromatic dispersion information CDi. Then, at step 502, the controller C preferably determines the target clock frequency Ft and the target supply voltage Vt. In particular, according to the preferred embodiment of the present invention, the controller C looks through the lookup table of the storage unit with the value of the chromatic dispersion information CDi as index and retrieves from the table the target clock frequency Ft and the target supply voltage Vt corresponding to that particular value of the chromatic dispersion information CDi. Next, at step 503, the controller C sends a command to the supply voltage actuator VA in order to set the supply voltage of the digital portion DP as a whole (or of the first and second chromatic dispersion compensators CDC1, CDC2 only, according to alternative embodiments) to the target supply voltage Vt. Moreover, the controller C sends a command to the clock frequency actuator FA in order to set the clock frequency of the digital portion DP (or of the first and second chromatic dispersion compensators CDC1, CDC2 only, according to alternative embodiments) to the target clock frequency Ft.

According to a different embodiment of the present invention, at step 402 the control unit CU of the chromatic dispersion compensator CDC1 may determine the target calculation parameters by directly computing the target window size $N^*$ and the target window translation $X^*$ on the basis of the chromatic dispersion information CDi received at step 401, i.e. by performing on line, during operation, the minimization of the number of operations per sample as described above.

Likewise, at step 502, the controller C may directly compute the target clock frequency Ft and the target supply voltage Vt by applying on line, during operation, the DVFS technique.

According to the present invention, advantageously, the first and second chromatic dispersion compensators CDC1, CDC2 adapt the parameters needed for the FFT and IFFT computations (namely, the FFT/IFFT window size N and the window translation X) depending on the actual amount of chromatic dispersion to be compensated, in order to minimize the number of operations.

In particular, according to the present invention, the number of operations per sample performed by the CD compensators CDC1, CDC2 is variable and depends on the actual amount of chromatic dispersion to be compensated (which in turn depends on the actual length of the optical link). Since, as discussed above, the majority of optical links comprised within a typical network are shorter than the optical reach of the transmitters included in the nodes, adjusting the computational parameters for minimizing the number of operations according to the actual length of the optical links advantageously results in an improved efficiency from the computational point of view, as it allows saving computational resources.

It is to be noted that the choice of the frequency domain CD compensating algorithm described above for the chromatic dispersion compensation is merely exemplary. Indeed, the method of the present invention may be implemented even when other frequency domain CD compensating algorithms are used and also in case time domain CD compensating algorithms are used.

Moreover, the method of the present invention advantageously allows to significantly reduce the power consumed for the compensation of the chromatic dispersion within the coherent optical receiver RX. Indeed, in most situations, as the majority of the optical links in a network are shorter than the optical reach of the nodes, the target clock frequency is lower that the clock frequency needed to compensate the chromatic dispersion associated to the optical reach and, as a consequence, also the supply voltage is reduced with respect to this reference case.

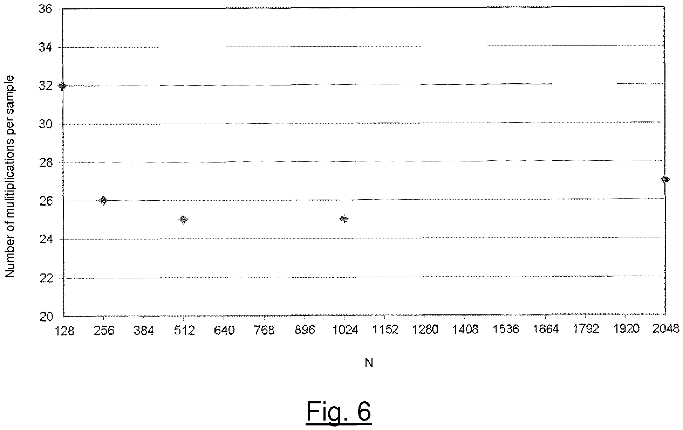

Figure 6 shows an exemplary situation in which the number of operations per sample has been computed by the inventors as a function of the calculation window size N. The inventors considered a 100 Gbps node (QPSK coherent transmission at 28 Gbps) having an optical reach equal to about 2000 km. The maximum window size Nmax has been set to 2048, which is the maximum window size for compensating the chromatic dispersion with this implementation. The graph in Figure 6 is related to a 100 km optical link with an amount of chromatic dispersion equal to 17 ps/km/nm. The graph represents the number of operations per output sample (and per polarisation) as a function of the window size N. It has been computed by the inventors that a 100 km optical link causes one sample to spread over SPR=115 samples. Then, the inventors have calculated the number of operations per sample involved by the CD compensation process with window size values N equal to powers of 2 ranging between 115 and 2048 samples. As shown in Figure 6, the minimized number of operations per sample is found to be 25 and corresponds to a target window size $N^*$=512 and target window translation $X^*=N^*\cdot(SPR-1)$=398.

The inventors then iterated the procedure illustrated above for various optical links having a length between 100 km and 2000 km (corresponding to the optical links of the 31-node European network cited above) and, for each considered length they found the target calculation window size $N^*$ and target window translation $X^*$ that provide the minimized number of operations per sample.

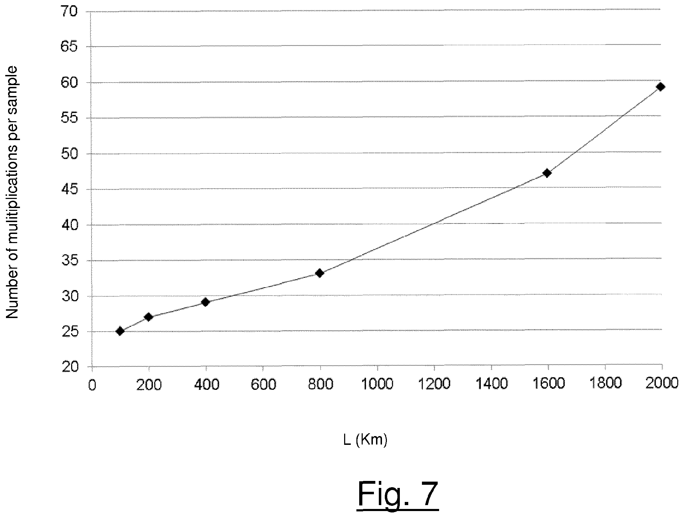

Figure 7 shows the results of this procedure. The graph in Figure 7 shows the minimized number of operations per sample as a function of the optical link length L. As shown, the number of operations monotonically increases as the length L of the optical link (and consequently the amount of chromatic dispersion) increases. At 2000 km, the minimized number of operations per sample is equal to 59. As the minimized number of operations is significantly lower for shorter optical links, the method of the present invention advantageously provides a significant reduction in the computational burden and a significant reduction of the consumed power.

Indeed, the inventors found that the chromatic dispersion compensation of the 2000 km optical link (reference case) yields a power consumption of about 25 W (associated with a clock frequency equal to about 4 GHz, and a supply voltage equal to about 5 V). The inventors then determined that the implementation of the method of the present invention in the exemplary situation considered above leads to a potential power gain equal to about 46% on average. Indeed, they found that for an optical link length of 1600 km, the power needed to compensate the chromatic dispersion is about 0.6 x 25W, and reduces to 0.29 x 25W for an optical link length of 800 km.

The functions of the various elements shown in the receiver RX of Figure 2 and in the chromatic dispersion compensator CDC1 of Figure 3 may be provided through the use of dedicated hardware, as well as hardware capable of executing software in association with appropriate software. The functions of the various elements may be provided by a single dedicated processor, by a single shared processor or by a plurality of individual processors, some of which may be shared. Moreover, the elements may comprise, without limitation, a digital signal processor (DSP) hardware, a network processor, an application specific integrated circuit (ASIC), a field programmable gate array (FPGA), a read-only memory (ROM) for storing software, a random access memory (RAM) and a non volatile storage. Other hardware, conventional and/or custom, may also be included.

It should be appreciated by those skilled in the art that any block diagrams herein, as those of Figures 2 and 3, represent conceptual views of illustrative circuitry embodying the principles of the invention. Similarly, it will be appreciated that any flow charts, flow diagrams, state transition diagrams, pseudo code, and the like, as that of Figures 4 and 5, represent various processes which may be substantially represented in computer readable medium and so executed by a computer or processor, whether or not such computer or processor is explicitly shown.

**Claims**

1. A method for compensating chromatic dispersion affecting an optical signal (S(t)) received at a coherent optical receiver (RX) of a node of an optical communication network, said compensating comprising applying a frequency domain digital algorithm, said frequency domain digital algorithm comprising performing a fast fourier transform, a filtering and an inverse fast fourier transform on a number N of digital samples of said optical signal (S(t)), said algorithm having one or more computational parameters (N, X), said method comprising the steps of:

   a) receiving a chromatic dispersion information (CDi) indicative of said chromatic dispersion;
   b) on the basis of said received chromatic dispersion information (CDi), determining one or more target computational parameters (N*, X*) in order to minimize the number of operations for executing said chromatic dispersion compensating algorithm; and
   c) compensating said chromatic dispersion by applying said algorithm using said one or more target computational parameters (N*, X*).

2. The method according to claim 1, wherein said one or more target computational parameters (N*, X*) comprise at least one of: a size N of a calculation window of said digital algorithm and a window translation X of said calculation window, N and X being expressed as numbers of samples of said optical signal (S(t)).

3. The method according to claim 2, wherein said step b) comprises minimizing a number of operations per sample, said number of operations per sample being equal to a number of operations performed when said calculation window is processed divided by said window translation X.

4. The method according to any of the preceding claims, wherein said step b) comprises reading said one or more target computational parameters (N*, X*) from a pre-calculated lookup table indexed by a set of possible values of said chromatic dispersion information (CDi).

5. The method according to any of claims 1 to 3, wherein said step b) comprises calculating said one or more target computational parameters (N*, X*) based on an actual value of said chromatic dispersion information (CDi).

6. The method according to any of the preceding claims further comprises, between said steps b) and c) a further step of:
   b') determining a target clock frequency (Ft) at which said minimized number of operations shall be performed and a target supply voltage (Vt) which shall be supplied to at least one chromatic dispersion compensator (CDC1, CDC2) comprised in said coherent optical receiver (RX) for performing said step c).

7. The method according to claim 6, wherein said target clock frequency (Ft) is such as said minimized number of operations is performed within a predetermined time interval.

8. The method according claim 6 or 7, wherein said target supply voltage (Vt) is the lowest voltage which shall be supplied to said at least one chromatic dispersion compensator (CDC1, CDC2) so that it may operate at said target clock frequency (Ft).

9. The method according to any of claims 6 to 8, wherein said step b') comprises reading at least one of said target clock frequency (Ft) and said target supply voltage (Vt) from a pre-calculated lookup table indexed by a set of possible values of said chromatic dispersion information (CDi).

10. The method according to any of claims 6 to 8, wherein said step b') comprises calculating said at least one of said target clock frequency (Ft) and said target supply voltage (Vt) based on said minimized number of operations.

11. The method according to any of the preceding claims, wherein at said step a) said chromatic dispersion information (CDi) are received from a control plane of said optical communication network.

12. A coherent optical receiver (RX) for a node of an optical communication network, said receiver (RX) being configured to receive an optical signal (S(t)) affected by chromatic dispersion, said coherent optical receiver (RX) comprising a chromatic dispersion compensator (CDC1, CDC2) configured to compensate said chromatic dispersion by applying a frequency domain digital algorithm, said frequency domain digital algorithm comprising performing a fast fourier transform, a filtering and an inverse fast fourier transform on a number N of digital samples of said optical signal (S(t)), said algorithm having one or more computational parameters (N, X) and to:

- receive a chromatic dispersion information (CDi) indicative of said chromatic dispersion;
- on the basis of said received chromatic dispersion information (CDi), determine one or more target computational parameters (N*, X*) in order to minimize the number of operations for executing said chromatic dispersion compensating algorithm; and
- compensate said chromatic dispersion by applying said algorithm using said one or more target computational parameters (N*, X*).

13. An optical communication network comprising a node in turn comprising a coherent optical receiver (RX) according to claim 12.

14. A computer program product comprising computer-executable instructions for performing, when the program is run on a computer, the steps of the method according to any of claims 1 to 11.

**Patentansprüche**

1. Verfahren zum Kompensieren chromatischer Dispersion, die ein optisches Signal (S(t)) betrifft, das empfangen wird an einem kohärenten optischen Empfänger (RX) eines Knotens eines optischen Kommunikationsnetzwerks, wobei besagtes Kompensieren umfasst das Anwenden eines digitalen Frequenzdomänenalgorithmus, wobei besagter digitale Frequenzdomänenalgorithmus umfasst das Durchführen einer Fast-Fourier-Transform, eines Filterns und einer inversen Fast-Fourier-Transform einer Anzahl N digitaler Proben von besagtem optischen Signal (S(t)), wobei besagter Algorithmus einen oder mehrere Berechnungsparameter (N, X) aufweist, wobei besagtes Verfahren die folgenden Schritte umfasst:

a) Empfangen von chromatischer Dispersionsinformation (CDi), die indikativ ist für besagte chromatische Dispersion;
b) auf Grundlage besagter empfangenen chromatischen Dispersionsinformation (CDi), Bestimmen eines oder mehrerer Zielberechnungsparameter (N*, X*) zum Minimieren der Anzahl von Operationen zum Ausführen besagten chromatischen Dispersionskompensationsalgorithmus; und
c) Kompensieren besagter chromatischen Dispersion durch Anwenden besagten Algorithmus unter Verwenden besagten einen oder mehrerer Zielberechnungsparameter (N*, X*).

2. Verfahren nach Anspruch 1, wobei besagter eine oder mehrere Zielberechnungsparameter (N*, X*) umfassen mindestens eines aus: Größe N eines Berechnungsfensters besagten digitalen Algorithmus und eine Fensterübersetzung X besagten Berechnungsfensters, wobei N und X ausgedrückt werden als Zahlen von Proben besagten optischen Signals (S(t)).

3. Verfahren nach Anspruch 2, wobei besagter Schritt b) umfasst das Minimieren der Anzahl von Operationen pro Probe, wobei besagte Anzahl von Operationen pro Probe gleich einer Anzahl von Operationen ist, die durchgeführt wurden, als besagtes Berechnungsfenster verarbeitet wurde, geteilt durch besagte Fensterübersetzung X.

4. Verfahren nach einem beliebigen der vorhergehenden Ansprüche, wobei besagter Schritt b) umfasst das Lesen besagten einen oder mehrerer Zielberechnungsparameter (N*, X*) aus einer vorberechneten Tabelle, indiziert mittels eines Satzes möglicher Werte besagter chromatischer Dispersionsinformation (CDi).

5. Verfahren nach einem beliebigen der Ansprüche 1 bis 3, wobei besagter Schritt b) umfasst das Berechnen besagten einen oder mehrerer Zielberechnungsparameter (N*, X*) auf Grundlage eines momentanen Wertes besagter chromatischer Dispersionsinformation (CDi).

6. Verfahren nach einem beliebigen der vorhergehenden Ansprüche, weiterhin umfassend, zwischen den Schritten b) und c) einen weiteren Schritt:
b') zum Bestimmen einer Zieluhrfrequenz (Ft), mit der besagte minimierte Anzahl von Operationen durchgeführt werden soll, und einer Zielversorgungsspannung (Vt), mit der mindestens ein chromatischer Dispersionskompensator (CDC1, CDC2) versorgt werden soll in besagtem kohärenten optischen Empfänger (RX) zum Durchführen besagten Schrittes c).

**7.** Verfahren nach Anspruch 6, wobei besagte Zieluhrfrequenz (Ft) so ist, dass besagte minimierte Anzahl von Operationen innerhalb eines vorbestimmten Zeitintervalls durchgeführt wird.

**8.** Verfahren nach Anspruch 6 oder 7, wobei besagte Zielversorgungsspannung (Vt) die geringste Spannung ist, mit der besagter mindestens eine chromatische Dispersionskompensator (CDC1, CDC2) versorgt wird, sodass er mit besagter Zieluhrfrequenz (Ft) betrieben werden kann.

**9.** Verfahren nach einem beliebigen der Ansprüche 6 is 8, wobei besagter Schritt b') umfasst das Lesen mindestens einer aus besagter Zieluhrfrequenz (Ft) und besagter Zielversorgungsspannung (Vt) aus einer vorberechneten Tabelle, die indiziert ist mittels eines Satzes möglicher Werte besagter chromatischer Dispersionsinformation (CDi).

**10.** Verfahren nach einem beliebigen der Ansprüche 6 is 8, wobei besagter Schritt b') umfasst das Berechnen mindestens eines aus besagter Zieluhrfrequenz (Ft) und besagter Zielversorgungsspannung (Vt) auf Grundlage besagter minimierten Anzahl von Operationen.

**11.** Verfahren nach einem beliebigen der vorhergehenden Ansprüche, wobei in besagtem Schritt a) besagte chromatischer Dispersionsinformation (CDi) empfangen wird von einer Steuerebene besagten optischen Kommunikationsnetzwerks.

**12.** Kohärenter optischer Empfänger (RX) für einen Knoten eines optischen Kommunikationsnetzwerks, wobei besagter Empfänger (RX) konfiguriert ist zum Empfangen eines optischen Signals (S(t)), das betroffen ist von chromatischer Dispersion, wobei besagter kohärenter optische Empfänger (RX) umfasst einen chromatischen Dispersionskompensator (CDC1, CDC2), der konfiguriert ist zum Kompensieren besagter chromatischen Dispersion durch Anwenden eines digitalen Frequenzdomänenalgorithmus, wobei besagter digitale Frequenzdomänenalgorithmus umfasst das Durchführen einer Fast-Fourier-Transform, eines Filterns und einer inversen Fast-Fourier-Transform einer Anzahl N digitaler Proben von besagtem optischen Signal (S(t)), wobei besagter Algorithmus einen oder mehrere Berechnungsparameter (N, X) aufweist, und zum:

- Empfangen von chromatischer Dispersionsinformation (CDi), die indikativ ist für besagte chromatische Dispersion;
- auf Grundlage besagter empfangenen chromatischen Dispersionsinformation (CDi), Bestimmen eines oder mehrerer Zielberechnungsparameter (N*, X*) zum Minimieren der Anzahl von Operationen zum Ausführen besagten chromatischen Dispersionskompensationsalgorithmus; und
- Kompensieren besagter chromatischen Dispersion durch Anwenden besagten Algorithmus unter Verwenden besagten einen oder mehrerer Zielberechnungsparameter (N*, X*).

**13.** Optisches Kommunikationsnetzwerk, umfassend einen Knoten, der wiederum einen kohärenten optischen Empfänger (RX) nach Anspruch 12 umfasst.

**14.** Computerprogramm-Produkt, umfassend computerausführbare Befehle zum Durchführen, wenn das Programm auf einem Computer ausgeführt wird, der Schritte des Verfahrens nach einem beliebigen der Ansprüche 1 bis 11.

**Revendications**

**1.** Procédé destiné à compenser une dispersion chromatique affectant un signal optique (S(t)) reçu au niveau d'un récepteur optique cohérent (RX) d'un noeud d'un réseau de communication optique, ladite compensation comprenant une application d'un algorithme numérique de domaine fréquentiel, ledit algorithme numérique de domaine fréquentiel comprenant une réalisation d'une transformation de Fourier rapide, un filtrage et une transformation de Fourier rapide inverse sur un nombre N d'échantillons numériques dudit signal optique (S(t)), ledit algorithme présentant un ou plusieurs paramètres de calcul (N, X), ledit procédé comprenant les étapes de :

a) réception d'une information de dispersion chromatique (CDi) indicatrice de ladite dispersion chromatique ;
b) sur la base de ladite information de dispersion chromatique (CDi), détermination d'un ou de plusieurs paramètres de calcul cibles (N*, X*) afin de minimiser le nombre d'opérations pour une exécution dudit algorithme de compensation de dispersion chromatique ; et

c) compensation de ladite dispersion chromatique en appliquant ledit algorithme en utilisant lesdits un ou plusieurs paramètres de calcul cibles (N*, X*).

2. Procédé selon la revendication 1, dans lequel lesdits un ou plusieurs paramètres de calcul cibles (N*, X*) comprennent au moins un : d'une taille N d'une fenêtre de calcul dudit algorithme numérique et d'une translation de fenêtre X de ladite fenêtre de calcul, N et X étant exprimés comme des nombres d'échantillons dudit signal optique (S(t)).

3. Procédé selon la revendication 2, dans lequel ladite étape b) comprend une minimisation d'un nombre d'opérations par échantillon, ledit nombre d'opérations par échantillon étant égal à un nombre d'opérations réalisées lorsque ladite fenêtre de calcul est traitée divisé par ladite translation de fenêtre X.

4. Procédé selon l'une quelconque des revendications précédentes, dans lequel ladite étape b) comprend une lecture desdits un ou plusieurs paramètres de calcul cibles (N*, X*) à partir d'une table de recherche préalablement calculée indexée par un ensemble de valeurs possibles de ladite information de dispersion chromatique (CDi).

5. Procédé selon l'une quelconque des revendications 1 à 3, dans lequel ladite étape b) comprend un calcul desdits un ou plusieurs paramètres de calcul cibles (N*, X*) sur la base d'une valeur réelle de ladite information de dispersion chromatique (CDi).

6. Procédé selon l'une quelconque des revendications précédentes comprenant en outre, entre lesdites étapes b) et c) une autre étape de :

b') détermination d'une fréquence d'horloge (Ft) à laquelle ledit nombre minimisé d'opérations doit être réalisé et d'une tension d'alimentation cible (Vt) qui doit être fournie à au moins un compensateur de dispersion chromatique (CDC1, CDC2) compris dans ledit récepteur optique cohérent (RX) pour une réalisation de ladite étape c).

7. Procédé selon la revendication 6, dans lequel ladite fréquence d'horloge cible (Ft) est telle que ledit nombre minimisé d'opérations est réalisé à l'intérieur d'un intervalle de temps prédéterminé.

8. Procédé selon la revendication 6 ou 7, dans lequel ladite tension d'alimentation cible (Vt) est la tension la plus basse qui doit être fournie audit au moins un compensateur de dispersion chromatique (CDC1, CDC2) afin qu'il puisse opérer à ladite fréquence d'horloge cible (Ft).

9. Procédé selon l'une quelconque des revendications 6 à 8, dans lequel ladite étape b') comprend une lecture d'au moins une de ladite fréquence d'horloge cible (Ft) et de ladite tension d'alimentation cible (Vt) à partir d'une table de recherche préalablement calculée indexée par un ensemble de valeurs possibles de ladite information de dispersion chromatique (CDi).

10. Procédé selon l'une quelconque des revendications 6 à 8, dans lequel ladite étape b') comprend un calcul de ladite au moins une de ladite fréquence d'horloge cible (Ft) et de ladite tension d'alimentation cible (Vt) sur la base dudit nombre minimisé d'opérations.

11. Procédé selon l'une quelconque des revendications précédentes, dans lequel à ladite étape a) ladite information de dispersion chromatique (CDi) est reçue à partir d'un panneau de commande dudit réseau de communication optique.

12. Récepteur optique cohérent (RX) pour un noeud d'un réseau de communication optique, ledit récepteur (RX) étant configuré pour recevoir un signal optique (S(t)) affecté par une dispersion chromatique, ledit récepteur optique cohérent (RX) comprenant un compensateur de dispersion chromatique (CDC1, CDC2) configuré pour compenser ladite dispersion chromatique en appliquant un algorithme numérique de domaine fréquentiel, ledit algorithme numérique de domaine fréquentiel comprenant une réalisation d'une transformation de Fourier rapide, un filtrage et une transformation de Fourier rapide inverse sur un nombre N d'échantillons numériques dudit signal optique (S(t)), ledit algorithme présentant un ou plusieurs paramètres de calcul (N, X) et pour :

- recevoir une information de dispersion chromatique (CDi) indicatrice de ladite dispersion chromatique ;
- sur la base de ladite information de dispersion chromatique (CDi) reçue, déterminer un ou plusieurs paramètres de calcul cibles (N*, X*) afin de minimiser le nombre d'opérations pour une exécution dudit algorithme de compensation de dispersion chromatique ; et

- compenser ladite dispersion chromatique en appliquant ledit algorithme en utilisant lesdits un ou plusieurs paramètres de calcul cibles (N*, X*).

13. Réseau de communication optique comprenant un noeud comprenant en retour un récepteur optique cohérent (RX) selon la revendication 12.

14. Produit de programme informatique comprenant des instructions exécutables par ordinateur destinées à réaliser, lorsque le programme est exécuté sur un ordinateur, des étapes du procédé selon l'une quelconque des revendications 1 à 11.

## Fig. 1

Fig. 2

CDi

CDC1

DS1$_k$

CU

FTM        F        IFTM

CDS1$_k$

# Fig. 3

start

401 — receive CD information

402 — determine CD compensation algorithm parameters
that minimize the number of operations
(target computing parameters)

403 — run CD compensation algorithm
with target computing parameters

end

# Fig. 4

start

501 — receive CD information

502 — determine target voltage Vt and
target clock frequency Ft

503 — send command to voltage actuator and
to clock frequency actuator

end

<u>Fig. 5</u>

Fig. 6

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2357740 A1
- US 2012128376 A1

- US 2012114341 A1

**Non-patent literature cited in the description**

- **O. ZIA-CHAHABI et al.** Efficient frequency-domain implementation of block-LMS/CMA fractionally spaced equalization for coherent optical communications. *IEEE Photonics Technology Letters,* 15 November 2011, vol. 23 (22

- Efficient frequency domain chromatic dispersion compensation in a coherent Polmux QPSK-receiver. **J.C. GEYER et al.** Optical Fiber Communication (OFC) and National Fiber Optic Engineers Conference, 2010 Conference on (OFC/NFOEC). IEEE, 21 March 2010